**Europäisches Patentamt**

**European Patent Office**

**Office européen des brevets**

(19)

(11) **EP 1 528 372 A2**

(12) **EUROPÄISCHE PATENTANMELDUNG**

| | |
|---|---|
| (43) Veröffentlichungstag:<br>**04.05.2005 Patentblatt 2005/18** | (51) Int Cl.$^7$: **G01F 1/32** |

(21) Anmeldenummer: **04020951.2**

(22) Anmeldetag: **03.09.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **19.09.2003 DE 10343958**

(71) Anmelder:
• **ABB PATENT GmbH**
  **68526 Ladenburg (DE)**
• **Universität Freiburg**
  **79100 Freiburg (DE)**

(72) Erfinder:
• **Rossberg, Axel G. Dr.**
  **40883 Ratingen (DE)**

• **Bartholomé, Kilian**
  **79106 Freiburg (DE)**
• **Timmer, Jens, Dr.**
  **79102 Freiburg (DE)**
• **Friedrichs, René, Dipl.-Phys.**
  **68526 Ladenburg (DE)**
• **Buhl, Frank, Dipl.-Ing.**
  **37085 Göttingen (DE)**
• **Herwig, Jörg, Dipl.-Ing.**
  **37139 Adelebsen (DE)**

(74) Vertreter: **Miller, Toivo et al**
  **ABB Patent GmbH**
  **Postfach 1140**
  **68520 Ladenburg (DE)**

(54) **Messgerät und Verfahren zur Messung von Durchflüssen**

(57) Messgerät, insbesondere Wirbelzähler, dessen Messeffekt auf einem nichtlinearen Oszillator begründet ist und bei dem ein Sensor zur Aufnahme eines Messignals (S(t)) angeordnet ist, welches einer Auswerteeinheit (2) zuführbar ist, dadurch gekennzeichnet, dass aus den Phaseninkrementen psi(tau,t), d.h. aus den Differenzen zwischen momentanen und um eine Verzögerungszeit (tau) zeitverzögerten Werten des in einem Phasenextraktor (18) aus dem Messignal S(t) abgeleiteten Phasensignals phi(t), phi(ttau) ein Kopplungsindikatorwert (KI) gebildet ist, derart, dass an diesem durch Vergleich mit einem Kopplungsreferenzwert (KR) das Bestehen einer Phasenkopplung mit einem weiteren Oszillator erkennbar ist.

Fig. 1

**EP 1 528 372 A2**

**Beschreibung**

Die Erfindung betrifft ein Messgerät, gemäß dem Oberbegriff des Anspruchs 1, sowie ein Verfahren zur Messung des Durchflusses gemäß dem Oberbegriff des Anspruchs 15.

Die Erfindung geht von Messgeräten aus, deren Messprinzip auf einem Oszillator beruht, wie es beispielsweise bei Wirbelzählern, auch Vortex-Durchflussmesser genannt, die zur Bestimmung von Volumenfluss bzw. Flussgeschwindigkeit strömender Stoffe benutzt werden, der Fall ist.

Das Messprinzip von Vortex-Durchflussmessem beruht darauf, dass die Ablöse-Frequenz der sich hinter einem in der Strömung befindlichen Störkörper ablösenden Wirbel in einem funktionellen Zusammenhang mit der Strömungsgeschwindigkeit steht. Aus der Frequenz lässt sich die Strömungsgeschwindigkeit, und bei bekannter Rohrgeometrie damit der Durchfluss durch ein Rohr ermitteln.

Genauer betrachtet lässt sich die Funktionsweise eines Vortex-Durchflussmessers so erklären: Der durch den Störkörper hervorgerufene physikalische Effekt ist der, dass an den Kanten des Störkörpers die Strömung abreißt und sich dahinter wechselweise und gegensinnig rotierende Wirbel bilden, die von der Strömung mitgenommen werden. Es bildet sich eine Wirbelstraße aus, die durch Frequenz und Phasenlage der Wirbelablösung charakterisiert ist. Dieser Effekt ist seit langem als "Kármánsche Wirbelstraße" bekannt.

Das dem Vortex-Durchflussmesser zugrundeliegende Messprinzip begründet sich darin, dass die Frequenz der Wirbelablösung ungefähr proportional zur Strömungsgeschwindigkeit ist.

Zur messtechnischen Erfassung der Frequenz der Wirbelablösung macht man sich die Tatsache zunutze, dass die sich beim Vortexzähler am Wirbelkörper wechselseitig ablösenden Wirbel lokale Geschwindigkeits- und Druckänderungen erzeugen, welche dann von einem geeigneten Sensor, zum Beispiel einem piezoelektrischen Drucksensor, erfasst werden können. Aus dem Messsignal des Sensors lässt sich also die Frequenz der Wirbelablösung und damit die Strömungsgeschwindigkeit des Mediums in der Rohrleitung ermitteln.

Das Messsignal liegt meistens in Form eines analogen elektronischen Signals vor, und es wird einer Auswerteeinheit zur Weiterverarbeitung und Auswertung zugeführt. In der Auswerteeinheit wird das analoge elektrische Signal mit einem an sich bekannten Verfahren diskretisiert und digitalisiert und dadurch in ein digitales Signal verwandelt.

Die das Messprinzip begründende Wirbelstrasse hinter dem Störkörper stellt physikalisch einen nichtlinearen Oszillator dar. In dem Wirbelzähler können daneben noch weitere physikalische Effekte beobachtet werden, die weitere Oszillationen, hier auch als externe Oszillatoren bezeichnet, welche auch wieder durch Frequenz und Phasenlage charakterisiert sind, zur Folge haben. Solche Effekte sind beispielsweise Pulsationen im Leitungsdruck, Pulsationen des Durchflusses oder mechanische Schwingungen des Rohres. Charakteristisch für solche weiteren Oszillatoren ist unter anderem, dass sie plötzlich und unvorhersehbar auftreten und auch wieder verschwinden können und einer messtechnischen Erfassung nicht oder nur mit erheblichem Aufwand zugänglich sind.

Es ist nun bekannt, dass die Phasenlage der Wirbelablösung in der Vortex-Strasse dazu neigt, an die Phasenlage solcher weiteren Oszillationen anzukoppeln (Phasenkopplung), wodurch es zu einer fehlerhaften Anzeige des Durchflussmessers kommen kann.

Dieser gerade geschilderte Effekt der Phasenkopplung lässt sich folgendermaßen abstrakt verallgemeinern: Messsysteme, die auf nichtlinearen Oszillatoren beruhen, haben oft die Tendenz, dass die Phase $phi1(t)$ eines Oszillators (O1), der Teil des Messsystems ist, dazu neigt, an die Phase $phi2(t)$ eines anderen, externen Oszillators (O2) zu koppeln. Die Phasen werden hier als kontinuierliche Funktionen der Zeit aufgefasst, sie sind also nicht auf ein Intervall der Größe $2*pi$ beschränkt. Das zeitliche Mittel der Zeitableitung der Phase ist die Oszillationsfrequenz. Als Phasenkopplung bezeichnet man den Effekt, dass die aus der relativen Phase $phi[n,m]:=n*phi1(t)-m*phi2(t)$ gebildete zyklische, relative Phase $Delta\_phi[n,m](t):=phi[n,m](t)mod(2*pi)$ konstant ist, nur einige wenige, bevorzugte Werte annimmt oder auch nur eine ungleichförmige Verteilung aufweist. n und m sind dabei kleine natürliche Zahlen. Wenn n und m spezifiziert werden sollen, spricht man auch von n:m-Phasenkopplung.

Bezogen auf den Vortex-Durchflussmesser besteht der verständliche Wunsch des Anwenders, das Auftreten einer durch Phasenkopplung induzierten, störenden Beeinflussung der Durchflussmessung zu erkennen, um die dann fehlerhaften Durchflussmesswerte nicht irrtümlich als richtig anzunehmen mit möglicherweise fatalen Folgen für auf diesen Werten basierenden Steuer- oder Regelsystemen.

Es ist daher die Aufgabe der vorliegenden Erfindung, ein Messgerät zu schaffen, in dem ein Vorliegen von Phasen-Kopplung erkennbar ist, und zwar ohne Kenntnis über den externen Oszillator, sowie ein Verfahren zur Messung von Durchflüssen zu entwikkeln, bei dem ein Vorliegen von Phasen-Kopplung ohne Kenntnis über den externen Oszillator erkannt wird.

Die Aufgabe wird bezüglich des Messgerätes gelöst durch die kennzeichnenden Merkmale des Anspruchs 1, und bezüglich des Verfahrens durch die Merkmale des Anspruchs 15.

Erfindungsgemäß also ist aus dem Messsignal $S(t)$ ein Phasensignal $phi(t)$ ableitbar, und aus den Phaseninkrementen $psi(tau,t)$, d.h. aus den Differenzen zwischen momentanen und um eine Verzögerungszeit tau zeitverzögerten Werten des Phasensignals $phi(t)$, $phi(t-tau)$, ist ein Kopplungsindikatorwert gebildet, derart, dass an diesem durch Vergleich mit einem Kopplungsreferenzwert das Bestehen einer Phasenkopplung mit einem weiteren Oszillator erkennbar ist. Das Phasensignal phi(t) ist in der Auswerteeinheit - vor oder nach der Digitalisierung - in einem Funktionsblock, der im Folgenden auch als Phasenextraktor bezeichnet wird, aus dem Messsignal abgeleitet, und zwar unter Verwendung an sich bekannter Methoden, wie z.B. Phase-Locked-Loops, Einbettung im Verzögerungsraum, Berechnung des "analytischen Signals" oder durch Ermittlung der Phase aus dem Argument des Signals nach Durchgang durch einen geeigneten komplexwertigen Filter.

Mit der erfindungsgemäßen Vorrichtung wird die Aufgabe auf sehr elegante-Weise gelöst. Man nutzt dabei die Erkenntnis, dass Phasenkopplung auf zwei Arten vorliegen kann, einmal als sog. harte Phasenkopplung, bei der sich die relativen Phasen nur selten oder gar nicht über Bereiche von mehr als 2*pi ändern - solche Änderungen werden auch als Phasensprünge bezeichnet. Zweitens kann sog. weiche Phasenkopplung vorkommen, bei der Phasensprünge, also Änderungen der relativen Phasen von mehr als 2*pi, häufig auftreten.

Es wurde nun gefunden, dass aus den Phaseninkrementen des Messsignals ein Kopplungsindikatorwert ableitbar ist, dergestalt, dass an diesem durch Vergleich mit einem Kopplungsreferenzwert das Vorliegen einer Phasenkopplung erkennbar ist, und zwar ohne nähere Kenntnis des zweiten, weiteren Oszillators.

Der Vorteil der erfindungsgemäßen Vorrichtung liegt darin, dass zum Erkennen einer Phasenkopplung lediglich eine weitergehende Verwertung der in dem Messsignal vorliegenden Information, nämlich durch Bildung und weitere Verknüpfung der Phaseninkremente, erfolgen muss, ohne dass die weitere Oszillation messtechnisch zugänglich sein und erfasst werden muss.

Als weiterer Funktionsblock kann in einer sehr vorteilhaften Ausführungsform der Erfindung ein Signalspeicher zur Zwischenspeicherung der Phasensignalwerte über ein Zeitintervall vorhanden sein, derart dass die Phaseninkremente und der Koppelindikatorwert mit Phasensignalwerten aus diesem Signalspeicher bildbar sind. Der Signalspeicher kann dabei als Teil der Auswerteeinheit oder außerhalb der Auswerteeinheit angeordnet sein.

In einer vorteilhaften Ausführungsform kann der Koppelindikatorwert der Schätzwert der Varianz der Phaseninkremente (psi(tau, t)) sein. Der Schätzwert der Varianz der Phaseninkremente (psi(tau, t) kann dabei aus einer Funktion der Phaseninkremente psi(tau, t), insbesondere aus einem gleitenden Mittelwert der Quadrate der Phaseninkremente psi(tau, t) gebildet sein.

Der Koppelindikatorwert kann auch aus der geschätzten Verteilungsfunktion p(psi') des ganzzahligen Vielfachen der Phaseninkremente psi'(tau, t) = K*psi(tau, t) = K*phi(t) - K*phi(t-tau) gebildet sein. In diesem Fall kann gemäß einer besonders vorteilhaften Ausführungsform die geschätzte Verteilungsfunktion p(psi') des ganzzahligen Vielfachen der Phaseninkremente aus einem Histogramm gebildet sein.

Der Kopplungsreferenzwert ist vorteilhafterweise in einer Referenzmessung bestimmt und in einem Referenzwertspeicher zur weiteren Verarbeitung gespeichert.

Gemäß einer sehr vorteilhaften Ausführungsform umfasst die Auswerteeinheit eine Anzeigeeinheit zur Anzeige des Vorliegens einer Phasenkopplung. Der Benutzer des Durchflussmessers erhält damit einen Hinweis auf das Vorliegen einer Phasenkopplung. Er ist gewarnt, dass die ermittelten Messwerte für den Durchfluss aufgrund der Phasenkopplung fehlerhaft sein können. Die Anzeige kann so gestaltet sein, dass sie das Vorliegen und auch das Nicht-Vorliegen von Phasenkopplung anzeigt, so dass der Benutzer durch die Anzeige immer genau über die Vertrauenswürdigkeit der Durchflussmessung unterrichtet ist.

Die Auswerteeinheit kann selbstverständlich auch eine Datenschnittstelle zur Übermittlung der Information über das Vorliegen einer Phasenkopplung an eine Zentraleinheit umfassen. Die Zentraleinheit ist vorteilhafterweise dieselbe, die auch die Messwerte des Durchflusses weiterverarbeitet, etwa ein Prozessrechner. In der Zentraleinheit kann dann beispielsweise der Messwert des Durchflusses so lange ignoriert werden, wie die Information über das Vorliegen einer Phasenkopplung übermittelt wird, um so Fehler zu vermeiden.

Das erfindungsgemäße Verfahren zur Messung von Durchflüssen ist dadurch gekennzeichnet, dass aus den Phaseninkrementen psi(tau,t), d.h. aus den Differenzen zwischen momentanen und um eine Verzögerungszeit tau zeitverzögerten Werten des in einem Phasenextraktor aus dem Messsignal S(t) abgeleiteten Phasensignals phi(t), phi(t-tau) ein Kopplungsindikatorwert gebildet wird derart, dass an diesem durch Vergleich mit einem Kopplungsreferenzwert das Bestehen einer Phasenkopplung mit einem weiteren Oszillator erkannt wird.

Die Phasensignalwerte können dabei über ein Zeitintervall in einem innerhalb oder außerhalb der Auswerteeinheit angeordneten Signalspeicher zwischengespeichert werden, derart dass die Phaseninkremente und der Koppelindikatorwert mit Phasensignalwerten aus diesem Signalspeicher gebildet werden.

Als Koppelindikatorwert kann der Schätzwert der Varianz der Phaseninkremente psi(tau, t) gebildet werden.

Der Koppelindikator kann aber auch aus der geschätzten Verteilungsfunktion p(psi') des ganzzahligen Vielfachen der Phaseninkremente psi'(tau, t) = K*psi(tau, t) = K*phi(t) - K*phi(t-tau) gebildet werden.

Weitere vorteilhafte Ausgestaltungen und Verbesserungen der Erfindung und weitere Vorteile sind den Unteransprüchen zu entnehmen.

Anhand der Zeichnungen, in denen zwei Ausführungsbeispiele der Erfindung dargestellt sind, sollen die Erfindung sowie weitere vorteilhafte Ausgestaltungen und Verbesserungen sowie Vorteile der Erfindung näher erläutert und beschrieben werden.

Es zeigen:

Fig. 1 den Prinzipaufbau eines Wirbelzählers und Blockschaltbild der erfindungsgemäßen Verarbeitung des Messsignals zur Ableitung der Information über Vorliegen einer Phasenkopplung,

Fig. 2 den Prinzipaufbau eines Wirbelzählers und Blockschaltbild einer ersten Variante der erfindungsgemäßen Verarbeitung des Messsignals, hier zur Ableitung der Information über Vorliegen einer harten Phasenkopplung, und

Fig. 3 den Prinzipaufbau eines Wirbelzählers und Blockschaltbild einer zweiten Variante der erfindungsgemäßen Verarbeitung des Messsignals, hier zur Ableitung der Information über Vorliegen einer weichen Phasenkopplung.

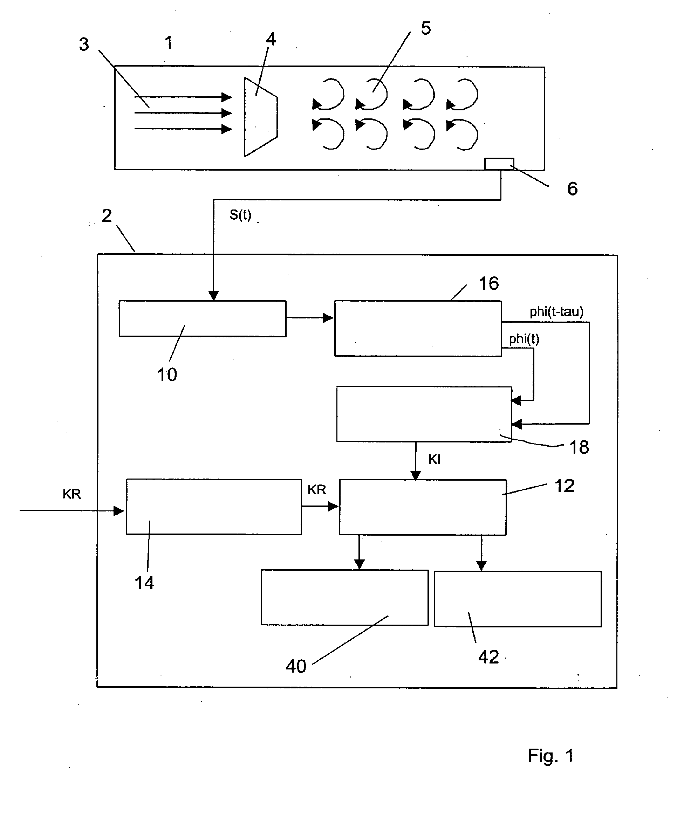

Figur 1 zeigt einen Wirbelzähldurchflussmesser, der als Vortex-Zähler ausgebildet ist. Ein strömendes Medium 3 durchströmt das Messrohr 1 und trifft auf den Störkörper 4, der hier einen trapezförmigen Querschnitt aufweist und zentrisch in der Rohrmitte angeordnet ist. Selbstverständlich ist die Ausführbarkeit der Erfindung nicht auf diese spezielle Störkörperform beschränkt, es können vielmehr alle im Stand der Technik bekannten Formen und Anordnungen von Störkörpem verwendet werden. Daraufhin bilden sich hinter dem Störkörper 4 Wirbel aus, die als Kärmänsche Wirbelstrasse 5 bezeichnet werden. Ein piezoelektrischer Sensor 6 misst die periodischen Druckschwankungen, die durch die Wirbelablösung entstehen und erzeugt somit ein Messsignal S(t), das an eine Auswerteeinheit 2 weitergeleitet wird.

Diese Auswerteeinheit umfasst einen Phasenextraktor 10, einen Signalzwischenspeicher 16, einen Kopplungsindikatorwertbildner 18, einen Kopplungsreferenzwertspeicher 14, eine Vergleichsvorrichtung 12, eine Phasenkopplungsanzeige 40 und eine Datenschnittstelle 42.

Im Phasenextraktor 10 wird aus dem Messsignal S(t) das Phasensignal phi(t) abgeleitet. Das Phasensignal phi(t) wird dann dem Signalzwischenspeicher 16 zugeführt, in dem es während eines Zeitintervalls T gespeichert wird. Es steht somit im Signalzwischenspeicher der zeitliche Verlauf des Phasensignals phi(t) über ein Zeitintervall T zur Verfügung. Zu einem Zeitpunkt t aus dem Zeitintervall T lassen sich also der Wert des Phasensignals phi(t) zu diesem Zeitpunkt, sowie die diesem Zeitpunkt t um ein Zeitintervall tau vorhergehenden, also um das Zeitintervall tau zeitverzögerten, Phasensignalwerte phi(t-tau), aus dem Signalzwischenspeicher abrufen.

Ein Phasensignalwert phi(t) und die diesem gegenüber zeitverzögerten Phasensignalwerte phi(t-tau) werden aus dem Signalzwischenspeicher 16 dem Kopplungsindikatorwertbildner 18 zugeführt. In diesem wird der Kopplungsindikatorwert KI gebildet und in der Vergleichsvorrichtung 12 nach dort abgelegten Regeln mit einem Kopplungsreferenzwert KR aus dem Kopplungsreferenzwertspeicher 14 verglichen. Der Kopplungsreferenzwert KR wurde zuvor extern ermittelt und in dem Kopplungsreferenzwertspeicher 14 abgelegt. Das Ergebnis des Vergleichs ist die Feststellung, dass eine Phasenkopplung vorliegt, oder dass keine Phasenkopplung vorliegt.

Die Information über das Vorliegen einer Phasenkopplung wird von der Vergieichsvorrichtung 12 an eine Phasenkopplungsanzeige 40 geleitet und dort in geeigneter Art und Weise dem Benutzer angezeigt. Beispielsweise kann auf einem Display eine Textmeldung erfolgen, etwa "Phasenkopplung". Es kann auch alternativ oder zusätzlich eine Warnleuchte aufleuchten oder blinken. Zusätzlich kann auch eine akustische Warnung erfolgen.

Parallel dazu wird die Information über das Vorliegen einer Phasenkopplung an eine Datenschnittstelle 42 übertragen, die sie dann in geeignet kodierter Form an ein übergeordnetes Datenverarbeitungs- oder Prozessleitsystem weitergibt. Es kann sich bei der Datenschnittstelle 42 um jede bekannte und in der Prozessindustrie gebräuchliche Datenschnittstelle handeln, insbesondere etwa um eine serielle oder parallele Schnittstelle oder eine Feldbusankopplung, aber auch um eine drahtlose Datenschnittstelle, wie beispielsweise eine Bluetooth-Schnittstelle.

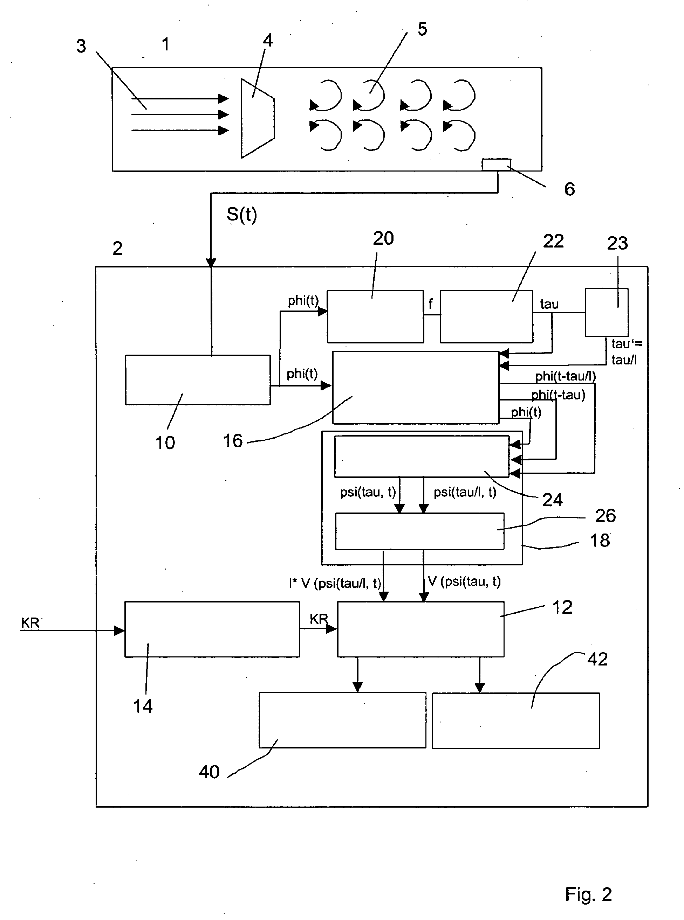

Fig. 2 zeigt als Blockschaltbild eine besondere Ausführungsform der erfindungsgemäßen Verarbeitung des Messsignals in der Auswerteeinheit 2 zum Erkennen einer harten Phasenkopplung.

Zum besseren Verständnis seien hier zunächst einige grundsätzliche Überlegungen zum Verfahren zur Erkennung einer harten Phasenkopplung dargestellt:

Idealerweise wächst die Phase eines ungekoppelten Oszillators linear mit der Zeit an, das heißt z. B. phi(t)=omega1*t. Dabei ist omega1 definiert als der langfristige zeitliche Mittelwert der Zeitableitung von phi(t). Die aus einem vom Oszillator abgeleitetem Messsignal bestimmte Phase ist typischerweise nicht identisch mit der Phase des Oszillators, weicht aber nur geringfügig davon ab. Die Abweichungen sind beschränkt. Für reale, ungekoppelte, nichtlineare Oszillatoren ist diese lineare Drift der Phase jedoch überlagert von einer Zufallsbewegung (engl. "random walk"), die z.B. durch dynamisches Rauschen im Oszillator oder auch durch die nichtlineare Dynamik des Oszillators selbst hervorgerufen werden kann. Diese Zufallsbewegung führt dazu, dass über große Zeitintervalle |phi(t)-omega1*t| über alle Grenzen wächst.

Im Falle einer harten Kopplung an einen externen Oszillator O2 wird diese Zufallsbewegung unterdrückt.

Die Unterdrückung der Zufallsbewegung wird durch ein als Blockschaltbild in Fig. 2 dargestelltes Verfahren erkannt, dessen Funktionsweise nun beschrieben wird:

Zunächst wird für eine geeignet gewählte Verzögerung tau die aktuelle Varianz des Phaseninkrements psi(tau,t):=phi(t)-phi(t-tau) geschätzt. Zur Schätzung der Varianz kann z.B. die mittlere quadratische Schwankung von psi(tau,t) in einem kurze Zeit zurückliegenden Zeitintervall benutzt werden. Alternativ kann ein entsprechender gleitender Mittelwert benutzt werden.

Der Schätzwert V der Varianz von psi(tau,t) wird mit einem im Messgerät gespeicherten Sollwert KR verglichen, der, für den ungekoppelten Oszillator, dem Erwartungswert von V entspricht. Eine Unterdrückung der Zufallsbewegung durch die Kopplung an einen externen Oszillator wird dadurch erkannt, dass dann der Wert von V (auch unter Berücksichtigung der Messunsicherheit) unterhalb von KR liegt.

Für die geeignete Wahl von tau gilt folgendes: Um auch schwache Kopplungen detektieren zu können, sollte tau etwa so groß gewählt werden, dass KR mindestens von der Größenordnung $2 \cdot pi^2$ ist. Um das Ansprechverhalten des Detektionsverfahren zu verbessern, kann es sinnvoll sein, kleinere Werte von tau zu wählen.

In Vortex-Durchflussmessem wählt man die Verzögerung tau geeigneterweise umgekehrt proportional zur Frequenz der Vortex-Ablösung, wobei die Frequenz etwa durch Mittelung über das Intervall der Länge T berechnet wird. Wie aus hydrodynamischen Überlegungen folgt, hängt V0 dann nur von der Reynolds-Zahl Re der Rohr-Strömung ab, und diese Abhängigkeit ist schwach. Deshalb reicht eine ungefährer Wert von Re zur Bestimmung von KR. Die Reynolds-Zahl lässt sich entweder bei bekanntem Durchfluss und Fluid berechnen, oder direkt aus dem Signal bestimmen.

Der Sollwert KR kann unter anderem mit einem der folgenden Teil-Verfahren bestimmt werden:

a) Der Sollwert wird herstellerseitig in einer Referenzmessung bestimmt und elektronisch im Messgerät gespeichert.

b) Der Nutzer bestimmt den Sollwert in einer Trainingsphase. Dazu startet der Nutzer im ungekoppelten Fall eine Trainingsroutine mit fester oder nutzerbestimmter Laufzeit. Aus den in der Laufzeit aufgenommenen Daten wird der Sollwerte V0 errechnet.

c) Man nutzt die Tatsache aus, dass die Varianz von psi(tau,t) im ungekoppelten Fall ungefähr linear mit tau wächst. Beispielsweise wählt man KR als das I-fache eines aktuellen Schätzwertes der Varianz von psi(tau/I,t), wobei I>1, z.B. I=2.

In der erfindungsgemäßen Anordnung nach Fig. 2 ist das oben geschilderte Verfahren folgendermaßen implementiert:

Aus dem Phasensignal phi(t) wird in einem Frequenzbildner 20 die Vortex-Frequenz und aus dieser in einem Verzögerungsbildner 22 die Verzögerungszeit tau gebildet. Zusammen mit dem Phasensignal phi(t) wird die Verzögerungszeit tau dem Signalzwischenspeicher 16 zugeführt. Das Phasensignal phi(t) und das zeitverzögerte Phasensignal phi(t-tau) werden beide aus dem Signalzwischenspeicher 16 einem Inkrementbildner 24 innerhalb des KI-Bildners 18 zugeleitet, der das Phaseninkrement psi(tau, t) bildet. Der Varianz-Schätzer 26 bildet aus dem Phaseninkrement psi(tau,t) den Schätzwert des Phaseninkrements. Dieser ist der Kopplungsindikatorwert KI, in diesem speziellen Fall hier auch mit V bezeichnet.

Aus dem KR-Speicher 14 wird der Kopplungsreferenzwert KR, aus dem Varianz-Schätzer 26 der Kopplungsindikatorwert V der Vergleichsvorrichtung 12 zugeführt. Darin wird verglichen, ob KR größer oder kleiner als V ist. Eine Phasenkopplung liegt dann vor, wenn KR größer als V ist, andernfalls liegt keine Phasenkopplung vor.

Der Kopplungsreferenzwert KR kann, wie oben unter a) und b) beschrieben, aus Vergleichsmessungen gewonnen und im Referenzwertspeicher 14 abgespeichert werden. Er kann aber auch, wie oben unter c) beschrieben, als das I-fache eines aktuellen Schätzwertes der Varianz von psi(tau/I,t), mit I>1, z.B. I=2, gewählt werden. In diesem Fall wird aus der Verzögerungszeit tau in dem Bruchteilsbildner 23 die neue Verzögerungszeit tau'= tau/I gebildet und zur Bildung des Phaseninkrements im Signalzwischenspeicher 16 verwendet. Der Varianzschätzer 26 bildet dann den Schätzwert der Varianz V(psi(tau/I,t), multipliziert diesen mit I und leitet diesen Wert der Vergleichsvorrichtung 12 als Referenzwert zu. In diesem Fall kommt also der Referenzwert KR nicht aus dem KR-Speicher 14, sondern ebenfalls aus dem Varianz-Schätzer 26.

Welcher Weg zur Bildung des Kopplungsreferenzwertes KR beschritten wird, ist in der internen Steuerung der Auswerteeinheit 2 festgelegt. Diese steht mit allen innerhalb der Auswerteeinheit 2 vorhandenen Funktionsblöcken in Verbindung, ist aber in den Fig. 1 bis 3 aus Gründen der besseren Übersichtlichkeit nicht eingezeichnet.

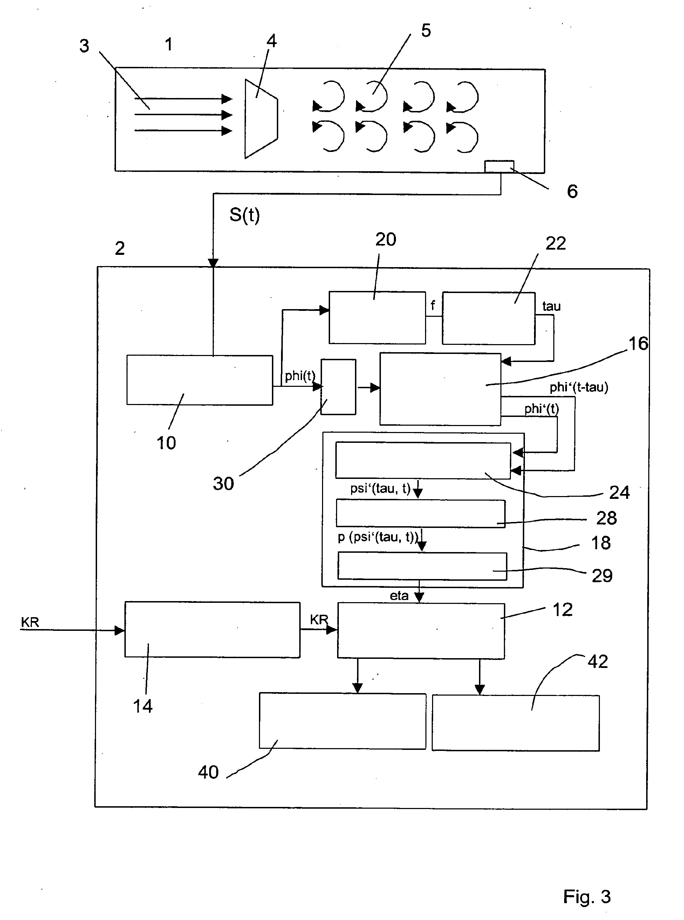

Fig. 3 zeigt als Blockschaltbild eine weitere besondere Ausführungsform der erfindungsgemäßen Verarbeitung des Messsignals in der Auswerteeinheit 2, hier zum Erkennen einer weichen Phasenkopplung.

Auch hier seien zum besseren Verständnis zunächst einige grundsätzliche Überlegungen zum Verfahren zur Erkennung einer weichen Phasenkopplung dargestellt:

Das Verfahren macht sich zunutze, dass bei weicher Phasenkopplung häufig Phasensprünge auftreten. Durch die Detektion von Phasensprüngen wird die weiche Phasenkopplung erkannt. Zur Detektion von Phasensprüngen wird folgendes Verfahren benutzt:

Aus der geschätzten Phase phi(t) berechnet man die Größe phi'(t):= K phi(t), wobei K durch folgende Regel bestimmt wird: für n:m Phasenkopplung ohne Symmetrie ist K=n. Ist, aufgrund von Symmetrien, die Phase phi1(t) equivariant bezüglich einer Phasenverschiebung um 2 pi/I, so ist für K das kleinste gemeinsame Vielfache von n und I zu wählen.

Zunächst wird für eine geeignet gewählte Verzögerung tau die Verteilungsfunktion (Wahrscheinlichkeitsdichte) des Phaseninkrements psi(tau,t):=phi'(t)-phi'(t-tau) geschätzt. Zur Schätzung der Verteilungsfunktion kann z.B. ein Histogramm benutzt werden, das beispielsweise durch gleitende Mittelung bestimmt werden kann.

Die geschätzte Verteilungsfunktion p(psi) untersucht man nun daraufhin, ob sie die für Phasensprünge charakteristische multimodale Struktur mit Maxima im Abstand von ca. 2 pi aufweist.

Dies geschieht beispielsweise durch Berechnung einer Größe eta, definiert durch

$$\text{eta} = 1/u(0) * \sum_{k=-\infty}^{k=+\infty} \left[ u(2{*}k{*}pi) - u((2{*}k{-}1){*}pi) \right]$$

wobei

$$u(beta) := \int_{-\infty}^{+\infty} p(psi)*p(psi{+}beta)\, d\, psi$$

Der so berechnete Wert eta wird mit einem im Messgerät gespeicherten Sollwert eta0 verglichen, der, für den ungekoppelten Oszillator, dem Erwartungswert von eta entspricht. Das Auftreten von Phasensprüngen durch die Kopplung an einen externen Oszillator wird dadurch erkannt, dass dann der Wert von eta (auch unter Berücksichtigung des Messfehlers) oberhalb von eta0 liegt.

Für die geeignete Wahl von tau gelten ähnliche Überlegungen wie oben für den Fall harter Kopplung dargestellt.

Der Sollwert eta0 kann unter anderem mit einem der folgenden Verfahren bestimmt werden:

    a) Der Sollwert wird herstellerseitig einer Referenzmessung bestimmt und elektronisch im Messgerät gespeichert.

    b) Der Nutzer bestimmt den Sollwert in einer Trainingsphase. Dazu startet der Nutzer im ungekoppelten Fall eine Trainingsroutine mit fester oder nutzerbestimmter Laufzeit. Aus den in der Laufzeit aufgenommenen Daten wird der Sollwerte eta0 errechnet.

Zur Beschreibung der Implementierung dieses Verfahrens in der erfindungsgemäßen Anordnung nach Fig. 3 werden im folgenden lediglich die Unterschiede zu den vorher bereits beschriebenen Anordnungen nach Fig. 1 und Fig. 2 betrachtet.

In der Anordnung nach Fig. 3 wird dem Signalzwischenspeicher 16 zum Zwecke der Phaseninkrementbildung die in einem Phasen-Multiplikator 30 mit dem Faktor K multiplizierte Phasenfunktion phi'(t) = K*phi(t) zugeführt. Die Verzögerungszeit tau wird dagegen aus dem ursprünglichen Phasensignal phi(t) abgeleitet, wie oben bei Fig. 2 bereits beschrieben. Anstelle des Varianz-Schätzers in Fig. 2 enthält der KI-Bildner in der Ausführungsform nach Fig. 3 einen Verteilungsfunktionsschätzer 28, der die geschätzte Verteilungsfunktion p(psi'(tau,t) des Phaseninkrements psi(tau,t) ermittelt. Die geschätzte Verteilungsfunktion p(psi'(tau,t) wird dann einem weiteren Funktionsblock, hier eta-Bildner genannt, zugeführt, der, wie oben beschrieben, die Größe eta bestimmt, welche dann den Kopplungsindikatorwert KI darstellt.

Innerhalb der Vergleichsvorrichtung 12 wird der Kopplungsindikatorwert KI, oder hier auch eta, mit einem Kopplungsreferenzwert KR, hier auch eta0 genannt, aus dem KR-Speicher 14 verglichen. Phasenkopplung liegt vor, wenn der Wert von eta größer als der Referenzwert eta0 ist.

Generell kann die Auswerteeinheit 2 mit den in ihr enthaltenen Funktionsblöcken als elektronische Schaltung oder als Programm innerhalb eines Mikrocomputers realisiert sein. Einzelheiten, wie solche elektronischen Schaltungen oder Programme aufzubauen und zu realisieren sind, sind dem Fachmann bekannt; sie basieren auf den im Stand der Technik bekannten Schaltungen und Programmiertechniken.

In einer weiteren, hier nicht durch eine Figur dargestellten Variante, kann die Auswerteeinheit 2 sowohl die Funktionsblöcke zur Erkennung der harten Phasenkopplung, als auch diejenigen zur Erkennung der weichen Phasenkopplung enthalten. Mit einer solchen Auswerteeinheit 2 kann man den ganzen Bereich der Phasenkopplung vollständig abdecken.

**Patentansprüche**

**1.** Messgerät, dessen Messprinzip auf einem Oszillator begründet ist, beispielsweise Wirbelzähler, und bei dem ein Sensor zur Aufnahme eines Messsignals (S(t)) angeordnet ist, welches einer Auswerteeinheit (2) zuführbar ist, **dadurch gekennzeichnet, dass** aus den Phaseninkrementen psi(tau,t), d.h. aus den Differenzen zwischen momentanen und um eine Verzögerungszeit (tau) zeitverzögerten Werten des aus dem Messsignal S(t) abgeleiteten Phasensignals phi(t), phi(t-tau) ein Kopplungsindikatorwert (KI) gebildet ist, derart, dass an diesem durch Vergleich mit einem Kopplungsreferenzwert (KR) das Bestehen einer Phasenkopplung mit einem weiteren Oszillator erkennbar ist.

2. Messgerät nach Anspruch 1, **dadurch gekennzeichnet, dass** ein Signalspeicher (16) zur Zwischenspeicherung der Phasensignalwerte über ein Zeitintervall vorhanden ist, derart dass die Phaseninkremente und der Koppelindikatorwert (KI) mit Phasensignalwerten aus diesem Signalspeicher bildbar sind.

3. Messgerät nach Anspruch 2, **dadurch gekennzeichnet, dass** der Koppelindikatorwert (KI) der Schätzwert (V) der Varianz der Phaseninkremente (psi(tau, t)) ist.

4. Messgerät nach Anspruch 3, **dadurch gekennzeichnet, dass** der Schätzwert (V) der Varianz der Phaseninkremente (psi(tau, t) aus einem gleitenden Mittelwert einer Funktion der Phaseninkremente (psi(tau, t) gebildet ist.

5. Messgerät nach Anspruch 3, **dadurch gekennzeichnet, dass** der Schätzwert (V) der Varianz der Phaseninkremente (psi(tau, t) aus einem gleitenden Mittelwert der Quadrate der Phaseninkremente (psi(tau, t) gebildet ist.

6. Messgerät nach einem der Ansprüche 1 bis 5, **dadurch gekennzeichnet, dass** der Kopplungsreferenzwert (KR) ein Vielfaches (I-faches) des Schätzwertes (V) der Varianz von mit einem Bruchteil der Verzögerungszeit (psi(tau/I, t) = phi(t) - phi(t - tau/I)) gebildeten Phaseninkrementen ist.

7. Messgerät nach Anspruch 2, **dadurch gekennzeichnet, dass** der Koppelindikator (KI) aus der geschätzten Verteilungsfunktion p(psi') des ganzzahligen Vielfachen der Phaseninkremente (psi'(tau, t) = K*psi(tau, t) = K*phi(t) - K*phi(t-tau)) gebildet ist.

8. Messgerät nach Anspruch 7, **dadurch gekennzeichnet, dass** die geschätzte Verteilungsfunktion (p(psi')) des ganzzahligen Vielfachen der Phaseninkremente aus einem Histogramm gebildet ist.

9. Messgerät nach einem der vorherigen Ansprüche, **dadurch gekennzeichnet, dass** der Kopplungsreferenzwert (KR) in einer Referenzmessung bestimmt und in einem Referenzwertspeicher (14) gespeichert ist.

10. Messgerät nach einem der vorhergehenden Ansprüche, **dadurch gekennzeichnet, dass** die Verzögerungszeit (tau) umgekehrt proportional zur Vortex- Frequenz (f) ist.

11. Messgerät nach Anspruch 10, **dadurch gekennzeichnet, dass** der Signalzwischenspeicher (16) Teil der Auswerteeinheit (2) ist.

12. Messgerät nach Anspruch 10, **dadurch gekennzeichnet, dass** der Signalzwischenspeicher (16) außerhalb der Auswerteeinheit (2) angeordnet ist.

13. Messgerät nach einem der vorhergehenden Ansprüche, **dadurch gekennzeichnet, dass** die Auswerteeinheit (2) eine Anzeigeeinheit (20) zur Anzeige des Vorliegens einer Phasenkopplung umfasst.

14. Messgerät nach Anspruch 13, **dadurch gekennzeichnet, dass** die Auswerteeinheit (2) eine Datenschnittstelle (22) zur Übermittlung der Information über das Vorliegen einer Phasenkopplung an eine Zentraleinheit umfasst.

15. Verfahren zur Messung des Durchflusses bei Durchflussmessern, deren Messeffekt auf einem Oszillator begründet ist, und bei denen ein von einem Sensor (6) aufgenommenes Messsignal (S(t)), einer Auswerteeinheit (2) zugeführt wird, **dadurch gekennzeichnet, dass** aus den Phaseninkrementen psi(tau,t), d.h. aus den Differenzen zwischen momentanen und um eine Verzögerungszeit (tau) zeitverzögerten Werten des in einem Phasenextraktor (18) aus dem Messsignal S(t) abgeleiteten Phasensignals phi(t), phi(t-tau) ein Kopplungsindikatorwert (KI) gebildet wird derart, dass an diesem durch Vergleich mit einem Kopplungsreferenzwert (KR) das Bestehen einer Phasenkopplung mit einem weiteren Oszillator erkannt wird.

16. Verfahren nach Anspruch 15, **dadurch gekennzeichnet, dass** die Phasensignalwerte über ein Zeitintervall in einem innerhalb oder außerhalb der Auswerteeinheit (2) angeordneten Signalspeicher (16) zwischengespeichert werden, derart dass die Phaseninkremente und der Koppelindikatorwert (KI) mit Phasensignalwerten aus diesem Signalspeicher gebildet werden.

17. Verfahren nach Anspruch 16, **dadurch gekennzeichnet, dass** als Koppelindikatorwert (KI) der Schätzwert (V) der Varianz der Phaseninkremente (psi(tau, t)) gebildet wird.

18. Verfahren nach Anspruch 17, **dadurch gekennzeichnet, dass** der Schätzwert (V) der Varianz der Phaseninkremente (psi(tau, t)) aus einem gleitenden Mittelwert einer Funktion der Phaseninkremente (psi(tau, t) gebildet wird.

19. Verfahren nach Anspruch 17, **dadurch gekennzeichnet, dass** der Schätzwert (V) der Varianz der Phaseninkremente (psi(tau, t)) aus einem gleitenden Mittelwert der Quadrate der Phaseninkremente (psi(tau, t)) gebildet wird.

20. Verfahren nach einem der Ansprüche 15 bis 19, **dadurch gekennzeichnet, dass** als Kopplungsreferenzwert (KR) ein Vielfaches (I-faches) des Schätzwertes (V) der Varianz von mit einem Bruchteil der Verzögerungszeit (psi(tau/I, t) = phi(t) - phi(t - tau/I)) gebildeten Phaseninkrementen gebildet wird.

21. Verfahren nach Anspruch 16, **dadurch gekennzeichnet, dass** der Koppelindikator (KI) aus der geschätzten Verteilungsfunktion p(psi') des ganzzahligen Vielfachen der Phaseninkremente (psi'(tau, t) = K*psi(tau, t) = K*phi(t) - K*phi(t-tau)) gebildet wird.

22. Verfahren nach Anspruch 21, **dadurch gekennzeichnet, dass** die geschätzte Verteilungsfunktion (p(psi')) des ganzzahligen Vielfachen der Phaseninkremente aus einem Histogramm gebildet wird.

23. Verfahren nach einem der Ansprüche 15 bis 22, **dadurch gekennzeichnet, dass** der Kopplungsreferenzwert (KR) in einer Referenzmessung bestimmt und in einem Referenzwertspeicher (14) gespeichert wird.

24. Verfahren nach einem der Ansprüche 15 bis 23, **dadurch gekennzeichnet, dass** die Verzögerungszeit (tau) umgekehrt proportional zur Vortex- Frequenz (f) gebildet wird.

25. Verfahren nach einem der Ansprüche 15 bis 24, **dadurch gekennzeichnet, dass** das Vorliegens einer Phasenkopplung über eine Datenschnittstelle (22) an eine Zentraleinheit übermittelt wird.

26. Verfahren nach einem der Ansprüche 15 bis 25, **dadurch gekennzeichnet, dass** das Vorliegen einer Phasenkopplung mit einer Anzeigeeinheit (20) angezeigt wird.

Fig. 1

Fig. 2

Fig. 3